(19) Europäisches Patentamt
European Patent Office
Office européen des brevets

(11) **EP 3 431 359 B1**

(12) **EUROPEAN PATENT SPECIFICATION**

(45) Date of publication and mention
of the grant of the patent:
**28.09.2022 Bulletin 2022/39**

(51) International Patent Classification (IPC):
**B61K 9/08** *(2006.01)* **G01M 17/08** *(2006.01)*
**B61L 23/04** *(2006.01)*

(21) Application number: **17766698.9**

(52) Cooperative Patent Classification (CPC):
**B61K 9/08; B61L 23/042; G01M 17/08**

(22) Date of filing: **14.03.2017**

(86) International application number:
**PCT/JP2017/010276**

(87) International publication number:
**WO 2017/159701 (21.09.2017 Gazette 2017/38)**

(54) **TRACK STATE EVALUATION METHOD, DEVICE, AND PROGRAM**

VERFAHREN, VORRICHTUNG UND PROGRAMM ZUR AUSWERTUNG DES GLEISZUSTANDS

PROCÉDÉ, DISPOSITIF ET PROGRAMME D'ÉVALUATION D'ÉTAT DE LA VOIE FERRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2016 JP 2016051149**

(43) Date of publication of application:
**23.01.2019 Bulletin 2019/04**

(73) Proprietor: **Nippon Steel Corporation
Tokyo (JP)**

(72) Inventors:
• **ITO, Shota
Tokyo 100-8071 (JP)**
• **MORITA, Akira
Tokyo 100-8071 (JP)**
• **SHINAGAWA, Daisuke
Tokyo 100-8071 (JP)**

(74) Representative: **Vossius & Partner
Patentanwälte Rechtsanwälte mbB
Siebertstrasse 3
81675 München (DE)**

(56) References cited:
**GB-A- 2 416 034        JP-A- H10 281 945
JP-A- 2009 258 890    JP-A- 2014 126 451
JP-A- 2015 168 309    JP-A- 2015 188 272**

• **KARAKASIS K ET AL: "A factorial analysis for the
determination of an optimal train speed with a
desired ride comfort", APPLIED ACOUSTICS,
ELSEVIER PUBLISHING, GB, vol. 66, no. 10, 1
October 2005 (2005-10-01), pages 1121-1134,
XP004982495, ISSN: 0003-682X, DOI:
10.1016/J.APACOUST.2005.02.006**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a track condition evaluation method, device, and program for evaluating the condition of a track along which railroad cars run. In particular, the present invention relates to a track condition evaluation method, device, and program capable of evaluating a track condition simply and at low cost, without influence from variation in the travel speed of the railroad car.

Background Art

The condition of a track along which railroad cars run deteriorates as a result of the repeated passage of railroad cars, for example causing the installation position of the track to shift, or degradation of the profile of the rail head due to wear. It is thus necessary to ascertain the condition of the track and perform maintenance as appropriate.

Known track condition evaluation methods include methods in which track displacement and the like is measured by dedicated track measuring vehicles that are not used for commercial operation. However, the high cost of track measuring vehicles means that they are not possessed by all railroad companies. Moreover, even if such track measuring vehicles are possessed, they are limited in number, resulting in infrequent measurements only a few times a year. Track condition is therefore not ascertained on a continuous basis. Moreover, there is no way of quantitatively evaluating the results of track maintenance, the period of time over which the effect of maintenance persist, or the like. Accordingly, track maintenance is currently performed as time-based maintenance (TBM), rather than condition-based maintenance (CBM) based on the evaluated condition of the track.

In order to address the above issue, methods have been proposed for providing railroad cars used in normal commercial operation with sensing functionality in order to evaluate track condition during commercial vehicle operation. For example, research is being carried out into employing bogies capable of measuring wheel weight and lateral pressure (PQ monitoring bogies) in commercial vehicles to be used in track condition evaluation. However, it is difficult to apply PQ monitoring bogies to existing railroad cars, necessitating the manufacture of new railroad cars, leading to high initial costs. A simple and low cost method that enables evaluation of a track condition is thus desirable.

The method described in Japanese Patent Application Laid-Open (JP-A) No. H08-15098 is proposed as an example of a simple and low cost evaluation method. The method described in JP-A No. H08-15098 measures vibration acceleration in a carriage body to compute a ride comfort level. In this method, in cases in which the ride comfort level at a given location is outside of a predetermined range determined using a pre-calculated average value and standard deviation for ride comfort level for that location, the track condition at that location is determined to have deteriorated.

However, the method described in JP-ANo. H08-15098 does not give any consideration to the travel speed of the railroad car. Even for the same track location, generally the travel speed of commercial vehicles traveling over this location will vary. There is a concern that such variation in travel speed would cause a change in vibration acceleration in the carriage body, and thus change the ride comfort level, even if there were no change in the condition of the track. In the method described in JP-ANo. H08-15098, which gives no consideration to the travel speed of the railroad car, there is a concern that the pre-calculated standard deviation of ride comfort levels for the same location would be based on differing ride comfort levels resulting from variation in the travel speed of the railroad car. Should the standard deviation become larger, there is a concern that the range determined using the average value and the standard deviation would also become broader. There is thus a concern of being unable to detect a change in track condition unless a major change in the track condition had arisen.

Moreover, in cases in which the ride comfort level at a given location is outside of the predetermined range, there is a concern that it might not be possible to distinguish between cases in which this is due to deterioration in the track condition, and cases in which this is due to variation in the travel speed of the railroad car.

Moreover, in order to eliminate the influence of variation in the travel speed of the railroad car, maintaining the travel speed of railroad car as they travel past a given location for which the ride comfort level is being evaluated would be conceivable. However, it is not realistic to apply such constraints to commercial vehicles.

Patent Document 2 relates to an error detection system for detecting an error by a vibration measuring instrument installed in a mobile body such as a railroad car.

Non-patent Document 1 discloses a method of optimization of a comfort index of a passenger, for the determination of an optimal train speed.

Related Art

Related Documents

Patent Document 1: JP-ANo. H08-15098
Patent Document 2: GB 2 416 034 A
Non-Patent Document 1: Karakasis et al., "A factorial analysis for the determination of an optimal train speed with a desired ride comfort", doi: 10.1016/j.apacoust.2005.02.006

SUMMARY OF INVENTION

The invention for which protection is sought is defined by the independent claim(s). The dependent claims concern particular embodiments.

Technical Problem

The present invention addresses the issues in the related art described above by providing an evaluation method and evaluation device capable of evaluating a track condition simply and at low cost without influence from variation in the travel speed of a railroad car. Solution to Problem
A track condition evaluation method according to a first aspect evaluates a condition of a track along which a railroad car travels and is defined in claim 1.
A track condition evaluation device according to a second aspect evaluates a condition of a track along which a railroad car travels and is defined in claim 7.
A program according to a third aspect evaluates a condition of a track along which a railroad car travels and is defined in claim 8.

Advantageous Effects of Invention

The track condition evaluation method, device, and program of aspects of the present invention enable simple and low cost evaluation of a track condition without influence from variation in the travel speed of a railroad car.

BRIEF DESCRIPTION OF DRAWINGS

Fig. 1 is a diagram illustrating an example relationship between the travel speed of a railroad car (average travel speed in a section) and ride comfort level (average ride comfort level in the section).
Fig. 2 is a diagram in which the ride comfort levels illustrated in Fig. 1 are organized chronologically according to the measurement time periods (year and month) of railroad car travel speed and carriage body vibration acceleration.
Fig. 3 is a schematic diagram illustrating a schematic configuration of a track condition evaluation device according to an exemplary embodiment of the present invention.
Fig. 4 is a schematic diagram illustrating a schematic configuration of a railroad car.
Fig. 5 is a diagram for which multivariate analysis has been performed on the same data as that illustrated in Fig. 2, in which measurement time periods (year and month) are plotted along the horizontal axis and measurement duration category scores are plotted along the vertical axis.
Fig. 6 is a schematic block diagram of an example of a computer that functions as a track condition evaluation device.
Fig. 7 is a flowchart of an example of track condition evaluation processing in an exemplary embodiment of the present invention.

DESCRIPTION OF EMBODIMENTS

Explanation follows regarding a track condition evaluation device according to an exemplary embodiment of the present invention, with reference to the drawings as appropriate. Note that in the present exemplary embodiment, explanation is given regarding an example in which the vehicle configuration element subject to a vibration acceleration measurement is a carriage body. However, similar implementation is also possible in cases in which the vehicle configuration element is a bogie, an axle box, or a drive device (motor or gear).

Outline of the Present Exemplary Embodiment

The inventors initially investigated the relationship between travel speed and ride comfort level in railroad cars. Specifically, over a predetermined period, the average travel speed of railroad cars was measured in a predetermined section of track, and tests were carried out to measure the average ride comfort level in this predetermined section. Note that maintenance was carried out in the predetermined section of track during the testing period. It was also confirmed that the deterioration had occurred in the predetermined section of track after maintenance had been carried out during the testing period.

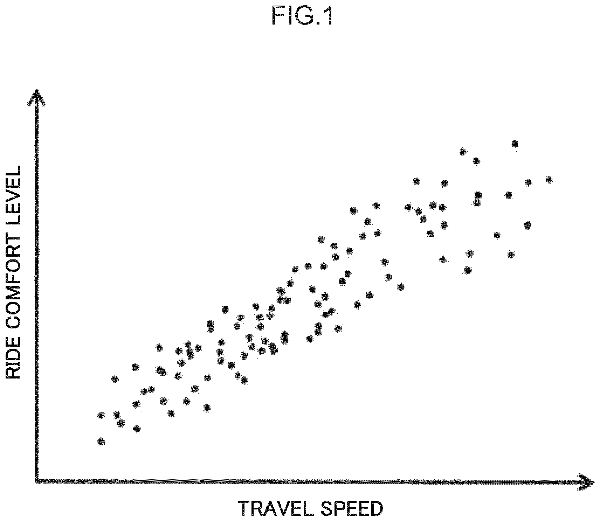

Fig. 1 is a diagram illustrating a relationship between the travel speed of a railroad car (average travel speed in the predetermined section) and ride comfort level (average ride comfort level in the predetermined section) measured in the testing described above. Note that ride comfort level is calculated by measuring vibration acceleration along the left-right direction of a carriage body and applying Equation (1) in JP-A No. H08-15098 described above.

As illustrated in Fig. 1, as was expected by the inventors, there is a tendency for ride comfort level to increase the greater the travel speed. Accordingly, as described above, in the method described in JP-A No. H08-15098, which does not give consideration to the travel speed of the railroad car, it is conceivable that it may not be possible to detect a change in a track condition unless a major change in the track condition has arisen. Note that higher ride comfort levels indicate worse the ride comfort.

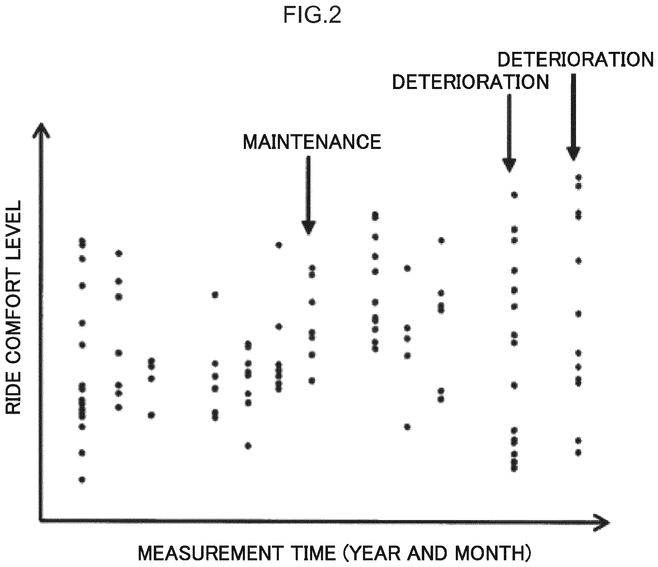

Fig. 2 is a diagram in which the ride comfort levels illustrated in Fig. 1 are organized chronologically according to the measurement time periods (year and month) of railroad car travel speed and carriage body vibration acceleration.

As is apparent from Fig. 2, changes in the track condition (due to track maintenance or track deterioration) are difficult to detect using simple changes in the ride comfort level (converted into chronological order). This is since, as illustrated in Fig. 1, changes in ride comfort level are influenced not only by changes in the track condition, but also by such factors as the travel speed of the railroad car. It is not possible to extract changes in track condition directly from data in which ride comfort levels calculated under different travel speed conditions of railroad cars are mixed.

The inventors gave much thought to these test results, and came to the view that if they were able to extract changes in an evaluation index associated with a track condition, such as a ride comfort level, arising due to a change in the measurement time alone, then changes in the extracted evaluation index would conceivably represent changes in the track condition. They discovered that by performing multivariate analysis using a relationship equation in which an evaluation index associated with a track condition, such as ride comfort level, is set as a target variable, and travel speeds of railroad cars and measurement time periods are set as explanatory variables, it is possible separate the influence of changes in travel speed on changes in the evaluation index from the influence of changes in measurement time periods on changes in the evaluation index, and to extract changes in the evaluation index that are caused solely by changes in measurement time.

The track condition evaluation method according to the exemplary embodiment of the present invention was developed based on this discovery of the inventors.

In a first process of the track condition evaluation method of the exemplary embodiment of the present invention, the speed of railroad car travel and vibration acceleration of a vehicle configuration element (any out of a carriage body, bogie, axle box, or drive device) are measured. Travel speed is measured for the purposes of brake control and the like even in normal commercial vehicles. Vibration acceleration is also measured, for the purposes of anti-sway control, in railroad cars installed with what is referred to as an anti-sway controller. It is thus possible to measure railroad car travel speed and the vibration acceleration of a vehicle configuration element simply and at low cost, without necessitating manufacture of a new railroad car.

An evaluation index relating to travel of the railroad car and expressed using vibration acceleration of a vehicle configuration element (for example, a ride comfort level) is considered to be an evaluation index associated with a track condition. In a second process of the exemplary embodiment of the present invention, multivariate analysis is performed using a relationship equation in which an evaluation index associated with a track condition is a target variable, travel speed is a quantitative explanatory variable, and at least the measurement time period of vibration acceleration is a qualitative explanatory variable. Specifically, the target variable is a quantitative variable, and the explanatory variables include both a quantitative variable and a qualitative variable, such that multivariate analysis referred to as extended type I quantification theory is performed.

It is known that category scores for qualitative variables obtained by multivariate analysis generally express a degree of contribution to the target variable. Accordingly, measurement time period category scores obtained by the multivariate analysis of the second process of the exemplary embodiment of the present invention express the degree of contribution of measurement time period to the evaluation index. In other words, measurement tine period category scores can be used to extract changes in the evaluation index caused solely by changes in measurement time period.

Accordingly, in a third process of the exemplary embodiment of the present invention, it is possible to evaluate changes in the condition of a predetermined location on the track based on measurement time period category scores.

As described above, the exemplary embodiment of the present invention enables a track condition to be evaluated simply and at low cost without influence from variation in the travel speed of a railroad car.

The method described in JP-ANo. H08-15098 assumes that all railroad cars have equivalent characteristics. However, in reality, even for the same model of railroad car, there will be subtle differences in characteristics in respective trainsets. There is thus a concern that vibration acceleration, and thus an evaluation index such as ride comfort level, may vary between trainsets even if there has been no change in the track condition. Accordingly, in cases in which measurement data measured for plural trainsets is included in the measurement data employed in multivariate analysis, it is preferable to perform multivariate analysis using a relationship equation that further includes trainset numbers as a qualitative explanatory variable, in order to more precisely extract changes in the evaluation index caused solely by changes in measurement time period.

Namely, in the first process, it is preferable to measure left-right direction and up-down direction vibration acceleration for the vehicle configuration elements provided at the railroad cars, as well as the railroad car travel speed, for plural trainsets. In the second process, it is preferable to employ a relationship equation further including trainset numbers as a qualitative explanatory variable when performing multivariate analysis.

The above preferable method enables the influence of trainset variation on changes the in evaluation index to be distinguished, even in cases in which measurement data measured for plural trainsets is included in the measurement data employed in multivariate analysis. It is thus possible to precisely extract changes in the evaluation index caused solely by changes in measurement time period.

This enables precise evaluation of the track condition.

Moreover, even within the same trainset, there is a concern that the magnitude of vibration acceleration, and thus the evaluation index, may change depending on the position on the vehicle configuration element where vibration acceleration is measured. For example, generally speaking there is a tendency for the vibration acceleration of vehicle configuration elements positioned toward the rear in the direction of travel of a railroad car to be greater than that of vehicle configuration elements positioned toward the front in the direction of travel of the railroad car. Accordingly, it is preferable to perform multivariate analysis using a relationship equation that further includes the positions on the vehicle configuration elements where the vibration acceleration was measured as a qualitative explanatory variable in order to even more precisely extract changes in the evaluation index caused solely by changes in measurement time period.

Namely, in the second process, it is preferable to perform multivariate analysis using a relationship equation that further includes the positions on the vehicle configuration elements in the trainset where vibration acceleration was measured as a qualitative explanatory variable.

The above preferable method enables the influence of variation in the positions on the vehicle configuration elements in the trainset where vibration acceleration was measured on a change in the evaluation index to be distinguished, enabling changes in the evaluation index caused solely by changes in measurement time period to be extracted with even more precision. This enables the track condition to be evaluated with even more precision.

Note that in the above preferable method, the "positions on the vehicle configuration elements in the trainset where vibration acceleration was measured" is a qualitative explanatory variable and may, for example, be a car number. Alternatively, this may, for example, be a combination of a car number and a "front" or "rear" of the carriage body (for example, "car no. 3, front").

In the exemplary embodiment of the present invention, as described above, ride comfort level may, for example, be employed as the "evaluation index expressed using vibration acceleration of a vehicle configuration element". The evaluation index of the present invention is not particularly limited so long as it is an evaluation index expressed using the vibration acceleration of a vehicle configuration element associated with a track condition, for example the root mean square (RMS) of the vibration acceleration, the maximum value of the vibration acceleration, the magnitude of the amplitude of the vibration acceleration, a number of occurrences of a vibration acceleration having an amplitude of at least a predetermined value, and so on.

Note that in the above preferable method (the track condition evaluation method further including trainset numbers and the positions on vehicle configuration elements where the vibration acceleration was measured as qualitative explanatory variables in multivariate analysis), in cases in which travel speed and vibration acceleration are measured at plural locations on the track, if any of the category scores for trainset numbers obtained by multivariate analysis is greater than the category scores for the other trainset numbers at any of the plural locations, the degree of contribution of the trainset number corresponding to this category score (its category score is higher than the other category scores) to the evaluation index is large, regardless of track location (regardless of track condition). In other words, some sort of abnormality may have arisen in the trainset with the trainset number corresponding to this category score. Similarly, if any of the category scores for the vehicle configuration element positions obtained by multivariate analysis is greater than the category scores for the other vehicle configuration element positions at any of the plural locations, some sort of abnormality may have arisen in the vehicle configuration element corresponding to this category score. Accordingly, when employing the above preferable method, in addition to track condition evaluation, the ability to identify railroad car abnormalities can be also be expected

Track Condition Evaluation Device Configuration

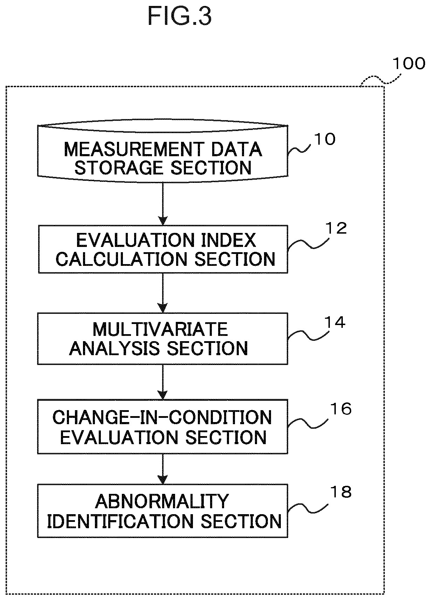

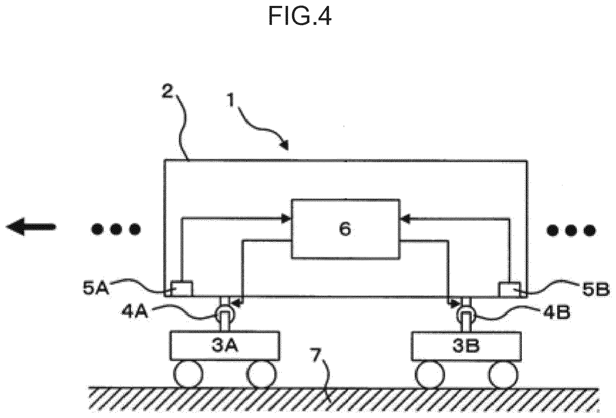

Fig. 3 is a schematic diagram illustrating a schematic configuration of a track condition evaluation device according to an exemplary embodiment of the present invention. As illustrated in Fig. 3, a track condition evaluation device 100 according to the present exemplary embodiment is a device that evaluates the condition of a track 7 on which a railroad car 1, illustrated in Fig. 4, travels in the direction indicated by the arrow. The track condition evaluation device 100 includes a measurement data storage section 10, an evaluation index calculation section 12, a multivariate analysis section 14, a change-in-condition evaluation section 16, and an abnormality identification section 18. The track condition evaluation device 100 is installed not in the railroad car 1 but at a separate location.

The railroad car 1 applied with the track condition evaluation device 100 according to the present exemplary embodiment is installed with an anti-sway controller. The anti-sway controller includes actuators 4A, 4B respectively provided at the front and rear of a carriage body 2 that press the carriage body 2 in a left-right direction with respect to bogies 3A, 3B (a direction perpendicular to the page in Fig. 4). The anti-sway controller also includes acceleration sensors 5A, 5B respectively provided at the front and rear of the carriage body 2 that detect acceleration of the carriage body 2 in the left-right direction. The anti-sway controller further includes a control device 6 that controls each of the actuators 4A, 4B based on a detected vibration acceleration input from the respective acceleration sensors 5A, 5B. The control device 6 is thus input with a front vibration acceleration of the carriage body 2, detected by the acceleration sensor 5A, and a rear vibration acceleration of the carriage body 2, detected by the acceleration sensor 5B.

The control device 6 of the present exemplary embodiment is also input with a travel speed of the railroad car 1 detected by a device (not illustrated in the drawings) provided to the carriage body 2 for the purposes of controlling braking of the railroad car 1 and the like.

The control device 6 of the present exemplary embodiment is configured to integrate input railroad car 1 travel speeds and to receive station signals indicating when the railroad car 1 has arrived at a station, which are used to correct the integrated values, to calculate the position (distance traveled) of the railroad car 1. Alternatively, the control device 6 of the present exemplary embodiment may be configured to receive external GPS signals to calculate the position of the railroad car 1. In other words, the control device 6 of the present exemplary embodiment is configured to calculate the position of locations on the track 7 for which the vibration acceleration has been measured.

For a predetermined location on the track 7, the travel speed of the railroad car 1 and measurement data including left-right direction vibration acceleration of the carriage body 2 of the railroad car 1 as measured at plural times (for example, over a period spanning from very recently to one year in the past) are input to the track condition evaluation device 100 according to the present exemplary embodiment together with the measurement time periods themselves. In the present exemplary embodiment, explanation is given regarding an example in which left-right direction vibration acceleration is measured, and this measurement data is input. However, if the acceleration sensors 5A, 5B are capable of detecting up-down direction vibration acceleration of the carriage body 2, the measured up-down direction vibration acceleration may also be input to the track condition evaluation device 100.

Specifically, for example, the travel speed and the vibration acceleration of the railroad car 1 input to the control device 6 are stored in a state associated with the position of the railroad car 1 as calculated by the control device 6 (namely, the position of the location on the track 7 where vibration acceleration was measured) and with measurement time period (year and month). Moreover, in the present exemplary embodiment, the travel speed and the vibration acceleration of the railroad car 1 input to the control device 6 are also stored in a state associated with the trainset number of the trainset to which the railroad car 1 belongs and the carriage body 2 position where the vibration acceleration was measured (the car number of the carriage body 2 and an identifier for the acceleration sensor 5A or 5B (namely, an identifier for the front or rear of the carriage body 2)). Data sequentially stored in the control device 6 spanning plural times is, for example, output to an external storage medium, for example what is referred to as a CF card, at appropriate timings, and this stored data is input to the track condition evaluation device 100 as measurement data via the external storage medium. Note that the present invention is not limited thereto, and configuration may be made in which data sequentially stored in the control device 6 is transmitted to the track condition evaluation device 100 over a wireless network.

The track condition evaluation device 100 of the present exemplary embodiment is input with measurement data as above for every railroad car 1 configuring one trainset traveling over the same track 7. Moreover, measurement data as above is input for plural trainsets (from every railroad car 1 configuring respective trainsets) having different trainset numbers that have traveled over the same track 7.

The measurement data storage section 10 stores plural pieces of input measurement data.

The evaluation index calculation section 12 calculates the evaluation index expressed using carriage body 2 vibration acceleration for each of the plural pieces of measurement data.

In the present exemplary embodiment, a ride comfort level calculated using Equation 1 in JP-A No. H08-15098 is employed as the evaluation index. Specifically, the multivariate analysis section 14 of the present exemplary embodiment groups together carriage body 2 vibration accelerations input for each section of the track 7, this being the unit over which condition is evaluated, based on the input positions of the locations on the track 7 (positions of the locations on the track 7 where vibration acceleration was measured) to calculate an average ride comfort level in each section. This average ride comfort level is used as the evaluation index. Similarly, the multivariate analysis section 14 of the present exemplary embodiment groups together railroad car 1 travel speeds input for each section of track 7 over which condition is evaluated, to calculate an average travel speed in each section.

For each section, the multivariate analysis section 14 performs multivariate analysis (extended type I quantification theory) on each piece of measurement data using a relationship equation including at least the evaluation index for that section as calculated by the evaluation index calculation section 12 as a target variable, the railroad car 1 travel speeds for that section as a quantitative explanatory variable, and the measurement time periods (year and month) as a qualitative explanatory variable. The multivariate analysis section 14 of the present exemplary embodiment is preferably configured to perform multivariate analysis using a relationship equation further including the trainset numbers and the carriage body 2 positions where vibration acceleration was measured in the trainset (identifying the car number of the carriage body 2 and the front or rear position on the carriage body) as qualitative explanatory variables.

Namely, for each section i in which the condition of a track 7 is to be evaluated, yi denotes ride comfort level (average ride comfort level), $\beta_0$ denotes a constant, $\beta_{1,1}$ to $\beta_{1,n1}$ denote category scores for trainset numbers, $\beta_{2,1}$ to $\beta_{2,n2}$ denote category scores for carriage body 2 positions where the vibration acceleration was measured in the trainset (identifying the car number of the carriage body 2 and the front or rear position on the carriage body 2), $\beta_{3,1}$ to $\beta_{3,n3}$ denote category scores for measurement time periods (year and month), xi denotes travel speed (average travel speed) in each section i, and $\beta_4$ denotes a regression coefficient of the travel speed xi. The multivariate analysis section 14 determines $\beta_0$, $\beta_{1,1}$ to $\beta_{1,n1}$, $\beta_{2,1}$ to $\beta_{2,n2}$, $\beta_{3,1}$ to $\beta_{3,n3}$, and $\beta_4$ for each section i so as to give the smallest residual sum of squares between the actual ride comfort level (ride comfort level directly calculated using the vibration acceleration of the carriage body 2) and a ride comfort level approximately calculated using Equation (1) below.
Equation (1)

$$y_i = \beta_0 + \begin{pmatrix} \beta_{1,1} \\ \vdots \\ \beta_{1,n1} \end{pmatrix} + \begin{pmatrix} \beta_{2,1} \\ \vdots \\ \beta_{2,n2} \end{pmatrix} + \begin{pmatrix} \beta_{3,1} \\ \vdots \\ \beta_{3,n3} \end{pmatrix} + \beta_4 x_i \qquad \dots (1)$$

In Equation (1), the ride comfort level yi for the measurement data in each section i is equated to an expression employing the category scores $\beta_{1,n1}$, $\beta_{2,n2}$, $\beta_{3,n3}$, respectively corresponding to trainset numbers, carriage body 2 positions where vibration acceleration was measured in a trainset, and measurement time periods (year and month) in the measurement data; the regression coefficient $\beta_4$; and the travel speed (average travel speed) xi.

In Equation (1), 1 to n1 are integers, and n1 refers to the number of trainset numbers included in the measurement data employed in multivariate analysis. For example, supposing the measurement data employed in multivariate analysis included travel speed and vibration acceleration associated with three trainset numbers, n1 would equal 3, and the category scores $\beta_{1,1}$ to $\beta_{1,3}$ would be respectively determined for each trainset number.

Moreover, in Equation (1), 1 to n2 are integers, and n2 refers to the number of carriage body 2 positions where the vibration acceleration included in the measurement data employed in multivariate analysis was measured in the trainset (identifying the car number of the carriage body 2 and the front or rear position on the carriage body 2). For example, supposing the measurement data employed in multivariate analysis includes vibration acceleration measured at front and rear positions (measured by acceleration sensors 5A, 5B) of each of car 1 to car 6, n2 would equal $6 \times 2$ = 12, and the category scores $\beta_{2,1}$ to $\beta_{2,12}$ would be determined for each combination of car number and front or rear position.

Moreover, in Equation (1), 1 to n3 are integers, and n3 refers to the number of measurement time periods (year and month) in the measurement data employed in multivariate analysis. For example, supposing the measurement data employed in multivariate analysis includes travel speeds and vibration accelerations measured from Jan 2015 to Dec 2015, n3 would equal 12, and the category scores $\beta_{3,1}$ to $\beta_{3,12}$ would be determined for each measurement time period .

Note that in a preferred configuration of the present exemplary embodiment, the carriage body 2 positions where vibration acceleration was measured in the trainset are expressed as combinations of a car number and front or rear position. However, the carriage body 2 positions where vibration acceleration was measured in the trainset may be expressed simply by car number, without any distinction between front and rear. In such cases, for example, even if the data employed in multivariate analysis includes vibration acceleration measured at the front and rear positions on each of cars 1 to 6, n2 in Equation (1) would be 6, and the category scores $\beta_{2,1}$ to $\beta_{2,6}$ would by the determined for each car number.

Moreover, in a preferred configuration, the multivariate analysis section 14 of the present exemplary embodiment performs multivariate analysis using a relationship equation in which the input measurement time periods, trainset numbers, and carriage body 2 positions where vibration acceleration was measured in the trainset are all set as qualitative explanatory variables. In one example, not covered by the claims, in cases in which a difference between vibration accelerations at different carriage body 2 positions (or different car numbers, etc.) is negligible, multivariate analysis may be performed employing a relationship equation in which only input measurement durations and trainset numbers are set as qualitative explanatory variables. In such cases, the multivariate analysis section 14 determines $\beta_0$, $\beta_{1,1}$ to $\beta_{1,n1}$, $\beta_{3,1}$ to $\beta_{3,n3}$, and $\beta_4$ for each section i so as to give the smallest residual sum of squares between the actual ride comfort level and a ride comfort level yi approximately calculated using Equation (2) below.

Equation (2)

$$y_i = \beta_0 + \begin{pmatrix} \beta_{1,1} \\ \vdots \\ \beta_{1,n1} \end{pmatrix} + \begin{pmatrix} \beta_{3,1} \\ \vdots \\ \beta_{3,n3} \end{pmatrix} + \beta_4 x_i \qquad \dots (2)$$

Moreover, for example, in cases in which the measurement data employed in multivariate analysis consists of travel speeds and vibration accelerations all associated with the same trainset number (the same trainset), multivariate analysis may be performed employing a relationship equation in which only input measurement time periods are set as a qualitative explanatory variable. In such cases, the multivariate analysis section 14 determines $\beta_0$, $\beta_{3,1}$ to $\beta_{3,n3}$, and $\beta_4$ for each section i so as to give the smallest residual sum of squares between the actual ride comfort level and a ride comfort level yi approximately calculated using Equation (3) below.

Equation (3)

$$y_i = \beta_0 + \begin{pmatrix} \beta_{3,1} \\ \vdots \\ \beta_{3,n3} \end{pmatrix} + \beta_4 x_i \qquad \dots (3)$$

For each section i, the change-in-condition evaluation section 16 evaluates a change in the condition of the section i of the track 7 based on changes in the measurement time period category scores $\beta_{3,1}$ to $\beta_{3,n3}$ for that section i obtained by multivariate analysis in the multivariate analysis section 14. The measurement time period category scores $\beta_{3,1}$ to $\beta_{3,n3}$ represent the degree of contribution of the measurement time periods to the ride comfort level yi.

In other words, changes in the ride comfort level yi caused solely by changes in measurement time periods can be extracted using the measurement time period category scores $\beta_{3,1}$ to $\beta_{3,n3}$.

Accordingly, change in the condition of the section i of the track 7 can be evaluated based on the measurement time period category scores $\beta_{3,1}$ to $\beta_{3,n3}$ obtained for that section i.

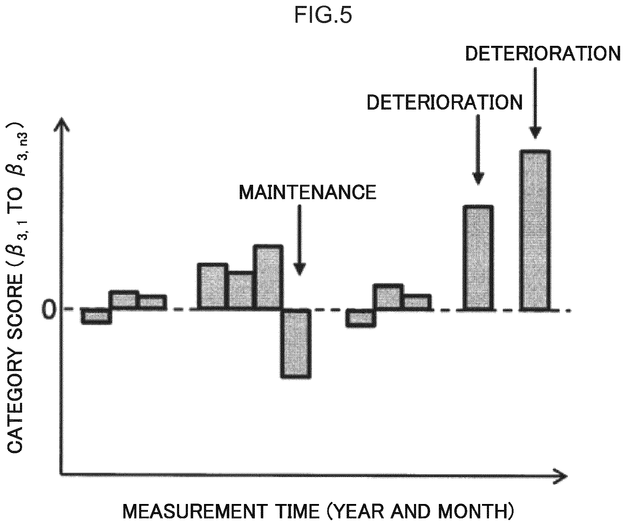

Fig. 5 is a diagram based on the same data as that illustrated in Fig. 2, in which multivariate analysis has been performed using the relationship equation expressed by Equation (1). In Fig. 5, measurement time periods (year and month) are plotted along the horizontal axis and category scores $\beta_{3,1}$ to $\beta_{3,n3}$ are plotted along the vertical axis.

As illustrated in Fig. 5, it can be seen that the absolute value of the category scores $\beta_{3,1}$ to $\beta_{3,n3}$ is a large negative value in the year and month in which maintenance was performed on the evaluated section of the track 7. Namely, since maintenance was performed on the evaluated section of the track 7 in this year and month, a decrease in the value of the ride comfort level yi (improvement in ride comfort) could be observed in the evaluated section of the track 7. Accordingly, for example, if the measurement time period category scores $\beta_{3,1}$ to $\beta_{3,n3}$ have a negative value less than or equal to a predetermined specific threshold value, it is possible to automatically evaluate that the evaluated section of the track 7 is in a good condition. Such evaluation is not possible with the results illustrated in Fig. 2, described above.

Moreover, as illustrated in Fig. 5, it can be seen that the absolute value of the category scores $\beta_{3,1}$ to $\beta_{3,n3}$ was a large positive value in the year and months in which deterioration of the evaluated section of the track 7 occurred. Namely, since the evaluated section of the track 7 suffered deterioration in these years and months, an increase in the value of the ride comfort level yi (decrease in ride comfort) could be observed in the evaluated section of the track 7.

Accordingly, for example, if the measurement time period category scores $\beta_{3,1}$ to $\beta_{3,n3}$ have a positive value greater than or equal to a predetermined specific threshold value, it is possible to automatically evaluate that the condition evaluated section of the track 7 has deteriorated. Such evaluation is not possible with the results illustrated in Fig. 2, described above.

The results of automatic evaluation, such as that described above, by the change-in-condition evaluation section 16 are displayed on a display section 26 provided to the track condition evaluation device 100. Alternatively, a graph in which the measurement time period category scores $\beta_{3,1}$ to $\beta_{3,n3}$ are plotted as illustrated in Fig. 5 may be displayed on the display section 26 provided to the track condition evaluation device 100. When viewed by a human, these results may be expected to be put into effective practical use in ways such as described below.

(1) In cases in which the category scores $\beta_{3,1}$ to $\beta_{3,n3}$ remain positive values greater than or equal to the specific threshold value (namely, in cases in which the condition of an evaluated section of the track 7 has deteriorated and there has been a continual decline in ride comfort), raising the priority level of maintenance of the evaluated section.
(2) Comparing the values of the category scores $\beta_{3,1}$ to $\beta_{3,n3}$ of an evaluated section of the track 7 before and after maintenance to (namely, evaluating the degree of improvement to the ride comfort level before and after maintenance) in order to quantify the effect of maintenance of the evaluated section.
(3) Evaluating the change over time of the values of the category scores $\beta_{3,1}$ to $\beta_{3,n3}$ after maintenance of an evaluated section of the track 7 in order to predict the amount of time until the ride comfort level returns to what it was before maintenance, and revise plans so as to perform repeat maintenance on the evaluated section before the predicted time has elapsed.

The abnormality identification section 18 identifies an abnormality in the trainset of a trainset number based on differences between the category scores $\beta_{1,1}$ to $\beta_{1,n1}$ among trainset numbers obtained by multivariate analysis in the multivariate analysis section 14 for each section i.

Specifically, the abnormality identification section 18 is able to identify that an abnormality has arisen in a trainset having a trainset number corresponding to a particular category score $\beta_{1,1}$ to $\beta_{1,n1}$ in cases in which the category score $\beta_{1,1}$ to $\beta_{1,n1}$ obtained by multivariate analysis for that trainset number using the multivariate analysis section 14 is greater than the category scores $\beta_{1,1}$ to $\beta_{1,n1}$ for the other trainset numbers in any of plural sections i.

The abnormality identification section 18 identifies an abnormality at a vehicle configuration element position based on differences between the category scores $\beta_{2,1}$ to $\beta_{2,n2}$ among the vehicle configuration element positions obtained by multivariate analysis in the multivariate analysis section 14 in each section i.

Specifically, the abnormality identification section 18 is able to identify that an abnormality has arisen in a carriage body 2 corresponding to a particular category score $\beta_{2,1}$ to $\beta_{2,n2}$ in cases in which that category score $\beta_{2,1}$ to $\beta_{2,n2}$ at a carriage body 2 position obtained by multivariate analysis using the multivariate analysis section 14 is greater than the category scores $\beta_{2,1}$ to $\beta_{2,n2}$ for the other carriage body 2 positions in any of plural sections i.

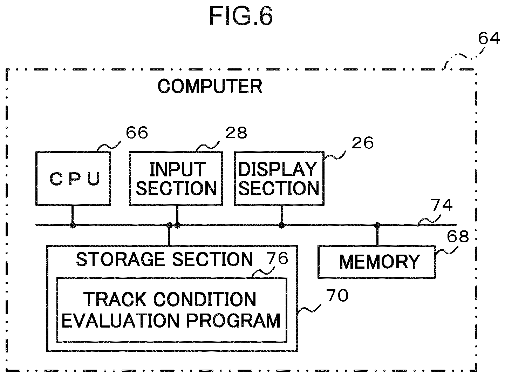

The track condition evaluation device 100 is, for example, implemented using a computer 64, illustrated in Fig. 6. The computer 64 includes a CPU 66, memory 68, a storage section 70 stored with a track condition evaluation program 76, the display section 26, including a monitor, and an input section 28 including a keyboard and a mouse. The CPU 66, the memory 68, the storage section 70, the display section 26, and the input section 28 are connected to one another through a bus 74.

The storage section 70 is implemented using an HDD, SSD, flash memory, or the like. The storage section 70 is stored with the track condition evaluation program 76 that causes the computer 64 to function as the track condition evaluation device 100. The CPU 66 reads the track condition evaluation program 76 from the storage section 70 and expands the track condition evaluation program 76 into the memory 68, and executes the track condition evaluation program 76.

Operation of the Track Condition Evaluation Device

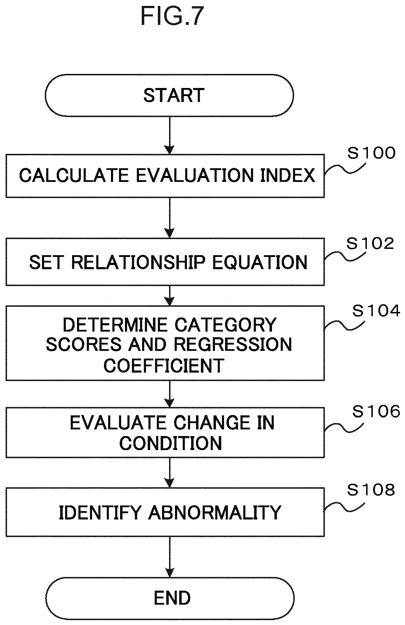

Next, as an example of operation of the present exemplary embodiment, with reference to Fig. 7, explanation follows regarding track condition evaluation processing executed by the track condition evaluation device 100, triggered when an operator inputs the track condition evaluation device 100 with plural pieces of measurement data stored in the control devices 6 of railroad cars 1 configuring respective trainsets, and for example performs an operation instructing track condition evaluation processing to be started. At step S100 of the track condition evaluation processing, for each of the plural pieces of measurement data stored in the measurement data storage section 10, the evaluation index calculation section 12 calculates an evaluation index based on vibration accelerations included in the measurement data.

At step S102, for each piece of measurement data in each section i, the multivariate analysis section 14 sets the relationship equation expressed in Equation (1) using the category scores $\beta_{1,n1}$, $\beta_{2,n2}$, $\beta_{3,n3}$ based on the measurement durations included in the measurement data, the travel speeds in that section i, trainset numbers, the carriage body 2 positions where vibration acceleration was measured in the trainsets, and the evaluation index calculated at step S100.

At step S104, for each section i, the multivariate analysis section 14 performs multivariate analysis using the relationship equation set for each piece of measurement data for that section i, and determines a constant $\beta_0$, the category scores $\beta_{1,1}$ to $\beta_{1,n1}$, $\beta_{2,1}$ to $\beta_{2,n2}$, $\beta_{3,1}$ to $\beta_{3,n3}$, and $\beta_4$, and the regression coefficient $\beta_4$ so as to give the smallest residual sum of squares between the evaluation index and the evaluation index yi approximately calculated using Equation (1).

At step S106, for each section i, the change-in-condition evaluation section 16 evaluates changes in the condition of that section i of the track 7 based on changes in the measurement time period category scores $\beta_{3,1}$ to $\beta_{3,n3}$ determined for that section i at step S104. Evaluation results from the change-in-condition evaluation section 16 are displayed by the display section 26.

At step S108, based on the trainset number category scores $\beta_{1,1}$ to $\beta_{1,n1}$ determined for each section i at step S104, the abnormality identification section 18 identifies trainset abnormalities for the trainset numbers from the differences between the trainset number category scores $\beta_{1,1}$ to $\beta_{1,n1}$ in each section i.

The abnormality identification section 18 also identifies abnormalities in each carriage body 2 based on the carriage body 2 position category scores $\beta_{2,1}$ to $\beta_{2,n2}$ determined for each section i at step S104, from the differences between the carriage body 2 position category scores $\beta_{2,1}$ to $\beta_{2,n2}$ for each section i.

Identification results from the abnormality identification section 18 are displayed by the display section 26, and the track condition evaluation processing is then ended.

As described above, the track condition evaluation device 100 according to the present exemplary embodiment enables the condition of the track 7 to be evaluated simply and at low cost without influence from variation in the travel speed of the railroad car 1, and without influence from differences between trainsets or differences between carriage bodies 2 positions where vibration acceleration was measured.

Note that in the foregoing explanation, explanation has been given regarding a case in which higher ride comfort level values represent poorer ride comfort. However, there is no limitation thereto. The ride comfort level may be designed such that higher ride comfort level values represent greater ride comfort.

Moreover, explanation has been given regarding a case in which the track condition evaluation device 100 is set at a separate location to the railroad car 1. However, there is no limitation thereto. The track condition evaluation device 100 may be installed inside the railroad car 1.

**Claims**

1. A track condition evaluation method for evaluating a condition of a track (7) along which a railroad car (1) travels, the method comprising:

   using a measurement section to measure a travel speed of the railroad car, and also to measure a vibration acceleration of a vehicle configuration element configured by any one of a carriage body (2), a bogie (3A, 3B), an axle box, or a drive device provided at the railroad car, at a predetermined location on the track in a plurality of measurement time periods;
   using an evaluation index calculation section (12) to calculate an evaluation index relating to travel of the railroad car by employing the measured vibration acceleration for each of the plurality of measurement time periods, wherein the evaluation index is an index expressed using the vibration acceleration of the vehicle configuration element associated with a track condition;
   using an analysis section (14) to, based on the calculated evaluation index, the measured travel speed, and the measurement time period for each of the plurality of measurement time periods, derive a category score for each of the plurality of measurement time periods by performing multivariate analysis employing a relationship equation in which the evaluation index is a target variable, the travel speed is a quantitative explanatory variable, and the measurement time period is a qualitative explanatory variable, wherein the category score for the measurement time period expresses a degree of contribution of the measurement time period to the evaluation index; and
   using a track condition evaluation section to evaluate a change in condition at the predetermined location on the track based on a change in the derived category scores for the plurality of measurement time periods.

2. The track condition evaluation method of claim 1, wherein:

   the measuring by the measurement section includes, for a plurality of trainsets, measuring a travel speed of the railroad car and a vibration acceleration of the vehicle configuration element provided at the railroad car at the predetermined location on the track in a plurality of measurement time periods; and
the multivariate analysis performed by the analysis section includes performing multivariate analysis employing the relationship equation further including a trainset number as a qualitative explanatory variable in order to derive a category score for each of the plurality of measurement time periods and a category score for each of the trainset numbers.

3. The track condition evaluation method of claim 2, wherein:
the multivariate analysis performed by the analysis section includes performing multivariate analysis employing the relationship equation further including a position on the vehicle configuration element where the vibration acceleration was measured in the trainset as a qualitative explanatory variable in order to derive a category score for each of the plurality of measurement time periods and a category score for each of the vehicle configuration element positions.

4. The track condition evaluation method of any one of claim 1 to claim 3, wherein the evaluation index is a ride comfort level.

5. The track condition evaluation method of claim 2, wherein:

the measuring by the measurement section includes, for a plurality of trainsets, measuring a travel speed of the railroad car and a vibration acceleration of the vehicle configuration element provided at the railroad car at a plurality of locations on the track and in a plurality of measurement time periods;
the calculating by the evaluation index calculation section includes calculating the evaluation index at the plurality of locations on the track and for each of the plurality of measurement time periods; and
the multivariate analysis performed by the analysis section includes, for each of the plurality of locations on the track, performing multivariate analysis employing the relationship equation further including a trainset number as a qualitative explanatory variable in order to derive a category score for each of the plurality of measurement time periods and a category score for each of the trainset numbers, and
the track condition evaluation method further comprising using an abnormality identification section to identify an abnormality in a trainset of the trainset numbers based on a difference between category scores among the trainset numbers at the plurality of locations.

6. The track condition evaluation method of claim 3, wherein:

the measuring by the measurement section includes, for a plurality of trainsets, measuring a travel speed of the railroad car and a vibration acceleration of the vehicle configuration element provided at the railroad car at a plurality of locations on the track;
the calculating by the evaluation index calculation section includes calculating the evaluation index at the plurality of locations on the track and for each of the plurality of measurement time periods; and
the multivariate analysis performed by the analysis section includes, for each of the plurality of locations on the track, performing multivariate analysis employing the relationship equation further including a position on the vehicle configuration element where the vibration acceleration was measured in the trainset as a qualitative explanatory variable in order to derive a category score for each of the plurality of measurement time periods and a category score for each of the vehicle configuration element positions,
the track condition evaluation method further comprising using an abnormality identification section to identify an abnormality at a position on the vehicle configuration elements based on a difference between category scores among the vehicle configuration element positions at the plurality of locations.

7. A track condition evaluation device (100) for evaluating a condition of a track along which a railroad car travels, the device comprising:

an evaluation index calculation section (12) that is configured to calculate an evaluation index relating to travel of the railroad car using a vibration acceleration measured by a measurement section that measures a travel speed of the railroad car and a vibration acceleration of a vehicle configuration element configured by any one of a carriage body (2), a bogie (3A, 3B), an axle box, or a drive device provided at the railroad car at a predetermined location on the track in a plurality of measurement time periods, wherein the evaluation index is an index expressed using the vibration acceleration of the vehicle configuration element associated with a track condition;
an analysis section (14) that, based on the calculated evaluation index, the travel speed measured by the measurement section, and the measurement time period for each of the plural measurement time periods, is configured to derive a category score for each of the plurality of measurement time periods by performing multivariate analysis employing a relationship equation in which the evaluation index is a target variable, the travel speed is a quantitative explanatory variable, and the measurement time period is a qualitative explanatory variable, wherein the category score for the measurement duration expresses a degree of contribution of the measurement time period to the evaluation index; and

a track condition evaluation section that is configured to evaluate evaluates a change in condition at the predetermined location on the track based on a change in the derived category scores for the plurality of measurement time periods.

8. A program for evaluating a condition of a track along which a railroad car travels, the program comprising instructions which, when the program is executed by a computer, cause the computer to: :

calculate an evaluation index relating to travel of the railroad car using a vibration acceleration measured by a measurement section that measures a travel speed of the railroad car and a vibration acceleration of a vehicle configuration element configured by any one of a carriage body, a bogie, an axle box, or a drive device provided at the railroad car at a predetermined location on the track in a plurality of measurement time periods, wherein the evaluation index is an index expressed using the vibration acceleration of the vehicle configuration element associated with a track condition;

based on the calculated evaluation index, the travel speed measured by the measurement section, and the measurement time period for each of the plural measurement durations, derive a category score for each of the plurality of measurement time periods by performing multivariate analysis employing a relationship equation in which the evaluation index is a target variable, the travel speed is a quantitative explanatory variable, and the measurement time period is a qualitative explanatory variable, wherein the category score for the measurement time period expresses a degree of contribution of the measurement time period to the evaluation index; and

evaluate a change in condition at the predetermined location on the track based on a change in the derived category scores for the plurality of measurement time periods

## Patentansprüche

1. Gleiszustandsbewertungsverfahren zum Bewerten eines Zustands eines Gleises (7), entlang dessen sich ein Eisenbahnwagen (1) fortbewegt, wobei das Verfahren aufweist:

Verwenden eines Messabschnitts zum Messen einer Fahrgeschwindigkeit des Eisenbahnwagens und auch zum Messen einer Vibrationsbeschleunigung eines Fahrzeugkonfigurationselements, das durch eine Wagenkasten (2), ein Drehgestell (3A, 3B), ein Achslager oder eine an dem Eisenbahnwagen vorgesehenen Antriebsvorrichtung konfiguriert ist, an einer vorbestimmten Stelle auf dem Gleis in mehreren Messzeiträumen;

Verwenden eines Bewertungsindexberechnungsabschnitts (12) zum Berechnen eines Bewertungsindex in Bezug auf die Fahrt des Eisenbahnwagens durch Benutzen der gemessenen Vibrationsbeschleunigung für jeden der mehreren Messzeiträume, wobei der Bewertungsindex ein Index ist, der anhand der Vibrationsbeschleunigung des mit einem Gleiszustand assoziierten Fahrzeugkonfigurationselements ausgedrückt wird;

Verwenden eines Analyseabschnitts (14) zum Ableiten, auf Basis des berechneten Bewertungsindex, der gemessenen Fahrgeschwindigkeit und des Messzeitraums für jeden der mehreren Messzeiträume, eines Kategorieergebnisses für jeden der mehreren Messzeiträume durch Durchführen einer multivariaten Analyse mittels einer Beziehungsgleichung, in der der Bewertungsindex eine Zielvariable ist, die Fahrgeschwindigkeit eine quantitative erklärende Variable ist und der Messzeitraum eine qualitative erklärende Variable ist, wobei das Kategorieergebnis für den Messzeitraum einen Grad des Beitrags des Messzeitraums zu dem Bewertungsindex ausdrückt; und

Verwenden eines Gleiszustandsbewertungsabschnitts zum Bewerten einer Zustandsänderung an der vorbestimmten Stelle auf dem Gleis auf Basis einer Änderung der abgeleiteten Kategorieergebnisse für die mehreren Messzeiträume.

2. Gleiszustandsbewertungsverfahren nach Anspruch 1, wobei:

das Messen durch den Messabschnitt für mehrere Eisenbahnen das Messen einer Fahrgeschwindigkeit des Eisenbahnwagens und einer Vibrationsbeschleunigung des an dem Eisenbahnwagen vorgesehenen Fahrzeugkonfigurationselements an der vorbestimmten Stelle auf dem Gleis in mehreren Messzeiträumen umfasst; und

die vom Analyseabschnitt durchgeführte multivariate Analyse das Durchführen einer multivariaten Analyse mittels der Beziehungsgleichung umfasst, die ferner eine Eisenbahnnummer als eine qualitative erklärende Variable beinhaltet, um ein Kategorieergebnis für jeden der mehreren Messzeiträume und ein Kategorieergebnis für jeden der Eisenbahnnummern abzuleiten.

**3.** Gleiszustandsbewertungsverfahren nach Anspruch 2, wobei:
die vom Analyseabschnitt durchgeführte multivariate Analyse das Durchführen einer multivariaten Analyse mittels der Beziehungsgleichung umfasst, die ferner eine Position auf dem Fahrzeugkonfigurationselement, an der die Vibrationsbeschleunigung in der Eisenbahn gemessen wurde, als qualitative erklärende Variable beinhaltet, um ein Kategorieergebnis für jeden der mehreren Messzeiträume und ein Kategorieergebnis für jede der Positionen des Fahrzeugkonfigurationselements abzuleiten.

**4.** Gleiszustandsbewertungsverfahren nach einem der Ansprüche 1 bis 3, wobei der Bewertungsindex ein Fahrkomfortniveau ist.

**5.** Gleiszustandsbewertungsverfahren nach Anspruch 2, wobei:

das Messen durch den Messabschnitt, für mehrere Eisenbahnen, das Messen einer Fahrgeschwindigkeit des Eisenbahnwagens und einer Vibrationsbeschleunigung des am Eisenbahnwagen vorgesehenen Fahrzeugkonfigurationselements an mehreren Stellen auf dem Gleis und in mehreren Messzeiträumen umfasst,
das Berechnen durch den Bewertungsindexberechnungsabschnitt das Berechnen des Bewertungsindex an den mehreren Stellen auf dem Gleis und für jeden der mehreren Messzeiträume umfasst; und
die vom Analyseabschnitt durchgeführte multivariate Analyse für jede der mehreren Stellen auf dem Gleis das Durchführen einer multivariaten Analyse mittels der Beziehungsgleichung umfasst, die ferner eine Eisenbahnnummer als qualitative erklärende Variable enthält, um ein Kategorieergebnis für jeden der mehreren Messzeiträume und ein Kategorieergebnis für jede der Eisenbahnnummern abzuleiten, und
das Gleiszustandsbewertungsverfahren ferner die Verwendung eines Anomalieidentifizierungsabschnitts umfasst, um eine Anomalie in einer Eisenbahn der Eisenbahnnummern auf Basis einer Differenz zwischen Kategorieergebnissen unter den Eisenbahnnummern an den mehreren Stellen zu identifizieren.

**6.** Gleiszustandsbewertungsverfahren nach Anspruch 3, wobei:

das Messen durch den Messabschnitt, für mehrere Eisenbahnen, das Messen einer Fahrgeschwindigkeit des Eisenbahnwagens und einer Vibrationsbeschleunigung des am Eisenbahnwagen vorgesehenen Fahrzeugkonfigurationselements an mehreren Stellen auf dem Gleis umfasst;
das Berechnen durch den Bewertungsindexberechnungsabschnitt das Berechnen des Bewertungsindex an den mehreren Stellen auf dem Gleis und für jeden der mehreren Messzeiträume umfasst; und
die vom Analyseabschnitt durchgeführte multivariate Analyse für jede der mehreren Stelle auf dem Gleis das Durchführen einer multivariaten Analyse mittels der Beziehungsgleichung umfasst, die ferner eine Position auf dem Fahrzeugkonfigurationselement beinhaltet, an der die Vibrationsbeschleunigung in der Eisenbahn als qualitative erklärende Variable gemessen wurde, um ein Kategorieergebnis für jeden der mehreren Messzeiträume und ein Kategorieergebnis für jede der Positionen des Fahrzeugkonfigurationselements abzuleiten,
wobei das Gleiszustandsbewertungsverfahren ferner die Verwendung eines Anomalieidentifizierungsabschnitts umfasst; um eine Anomalie an einer Position auf den Fahrzeugkonfigurationselementen auf Basis einer Differenz zwischen den Kategorieergebnissen unter den Positionen des Fahrzeugkonfigurationselements an den mehreren Stellen zu identifizieren.

**7.** Gleiszustandsbewertungsvorrichtung (100) zum Bewerten eines Zustands eines Gleises, entlang dessen sich ein Eisenbahnwagen fortbewegt, wobei die Vorrichtung aufweist:

einen Bewertungsindexberechnungsabschnitt (12), der zum Berechnen eines Bewertungsindex in Bezug auf die Fahrt des Eisenbahnwagens anhand einer Vibrationsbeschleunigung konfiguriert ist, die von einem Messabschnitt gemessen wird, der eine Fahrgeschwindigkeit des Eisenbahnwagens und eine Vibrationsbeschleunigung eines Fahrzeugkonfigurationselements misst, das durch einen Wagenkasten (2), ein Drehgestell (3A, 3B), ein Achslager oder eine am Eisenbahnwagen vorgesehene Antriebsvorrichtung konfiguriert ist, an einer vorbestimmten Stelle auf dem Gleis in mehreren Messzeiträumen, wobei der Bewertungsindex ein Index ist, der anhand der Vibrationsbeschleunigung des mit einem Gleiszustand assoziierten Fahrzeugkonfigurationselements ausgedrückt wird;

einen Analyseabschnitt (14), der auf Basis des berechneten Bewertungsindex, der vom Messabschnitt gemessenen Fahrgeschwindigkeit und dem Messzeitraum für jeden der mehreren Messzeiträume zum Ableiten eines Kategorieergebnisses für jeden der mehreren Messzeiträume durch Durchführen einer multivariaten Analyse mittels einer Beziehungsgleichung konfiguriert ist, in der der Bewertungsindex eine Zielvariable ist, die Fahrgeschwindigkeit eine quantitative erklärende Variable ist und der Messzeitraum eine qualitative erklärende Variable ist, wobei das Kategorieergebnis für die Messdauer einen Grad des Beitrags des Messzeitraums zum Bewertungsindex ausdrückt; und

einen Gleiszustandsbewertungsabschnitt, der zum Bewerten einer Zustandsänderung an der vorbestimmten Stelle auf dem Gleis auf Basis einer Änderung der abgeleiteten Kategorieergebnisse für die mehreren Messzeiträume konfiguriert ist.

8. Programm zum Bewerten eines Zustands eines Gleises, entlang dessen sich ein Eisenbahnwagen fortbewegt, wobei das Programm Befehle aufweist, die bei Ausführung des Programms durch einen Computer den Computer veranlassen zum:

Berechnen eines Bewertungsindex in Bezug auf die Fahrt des Eisenbahnwagens anhand einer Vibrationsbeschleunigung, die von einem Messabschnitt gemessen wird, der eine Fahrgeschwindigkeit des Eisenbahnwagens und eine Vibrationsbeschleunigung eines Fahrzeugkonfigurationselements misst, das durch einen Wagenkasten, ein Drehgestell, ein Achslager oder eine am Eisenbahnwagen vorgesehene Antriebsvorrichtung konfiguriert ist, an einer vorbestimmten Stelle auf dem Gleis in mehreren Messzeiträumen, wobei der Bewertungsindex ein Index ist, der anhand der Vibrationsbeschleunigung des mit einem Gleiszustand assoziierten Fahrzeugkonfigurationselements ausgedrückt wird;
Ableiten, auf Basis des berechneten Bewertungsindexes, der vom Messabschnitt gemessenen Fahrgeschwindigkeit und des Messzeitraums für jede der mehreren Messdauern, eines Kategorieergebnisses für jeden der mehreren Messzeiträume durch Durchführen einer multivariaten Analyse mittels einer Beziehungsgleichung, in der der Bewertungsindex eine Zielvariable ist, die Fahrgeschwindigkeit eine quantitative erklärende Variable ist und der Messzeitraum eine qualitative erklärende Variable ist, wobei das Kategorieergebnis für den Messzeitraum einen Grad des Beitrags des Messzeitraums zum Bewertungsindex ausdrückt; und
Bewerten einer Zustandsänderung an der vorbestimmten Stelle auf dem Gleis auf Basis einer Änderung der abgeleiteten Kategorieergebnisse für die mehreren Messzeiträume.

**Revendications**

1. Procédé d'évaluation d'état de voie pour évaluer un état d'une voie (7) le long de laquelle un wagon de chemin de fer (1) se déplace, le procédé comprenant :

l'utilisation d'une section de mesure pour mesurer une vitesse de déplacement du wagon de chemin de fer, et également pour mesurer une accélération de vibration d'un élément de configuration de véhicule configuré par l'un quelconque parmi une carrosserie de voiture (2), un bogie (3A, 3B), une boîte d'essieu, ou un dispositif d'entraînement prévu au niveau du wagon de chemin de fer, à un emplacement prédéterminé sur la voie lors d'une pluralité de périodes de mesure ;
l'utilisation d'une section de calcul d'indice d'évaluation (12) pour calculer un indice d'évaluation relatif au déplacement du wagon de chemin de fer en employant l'accélération de vibration mesurée pour chacune de la pluralité de périodes de mesure,
dans lequel l'indice d'évaluation est un indice exprimé à l'aide de l'accélération de vibration de l'élément de configuration de véhicule associée à un état de voie ;
l'utilisation d'une section d'analyse (14) pour, d'après l'indice d'évaluation calculé, la vitesse de déplacement mesurée, et la période de mesure pour chacune de la pluralité de périodes de mesure, dériver un score de catégorie pour chacune de la pluralité de périodes de mesure en réalisant une analyse multivariable employant une équation de relation dans laquelle l'indice d'évaluation est une variable cible, la vitesse de déplacement est une variable explicative quantitative, et la période de mesure est une variable explicative qualitative, dans lequel le score de catégorie pour la période de mesure exprime un degré de contribution de la période de mesure à l'indice d'évaluation ; et
l'utilisation d'une section d'évaluation d'état de voie pour évaluer un changement d'état à l'emplacement prédéterminé sur la voie d'après un changement des scores de catégorie dérivés pour la pluralité de périodes de mesure.

**2.** Procédé d'évaluation d'état de voie selon la revendication 1, dans lequel :

la mesure par la section de mesure inclut, pour une pluralité de chemins de fer, la mesure d'une vitesse de déplacement du wagon de chemin de fer et d'une accélération de vibration de l'élément de configuration de véhicule prévu au niveau du wagon de chemin de fer à l'emplacement prédéterminé sur la voie lors d'une pluralité de périodes de mesure ; et
l'analyse multivariable réalisée par la section d'analyse inclut la réalisation d'une analyse multivariable employant l'équation de relation incluant en outre un nombre de chemins de fer en tant que variable explicative qualitative afin de dériver un score de catégorie pour chacune de la pluralité de périodes de mesure et un score de catégorie pour chacun des nombres de chemins de fer.

**3.** Procédé d'évaluation d'état de voie selon la revendication 2, dans lequel :
l'analyse multivariable réalisée par la section d'analyse inclut la réalisation d'une analyse multivariable employant l'équation de relation incluant en outre une position sur l'élément de configuration de véhicule où l'accélération de vibration a été mesurée dans le chemin de fer en tant que variable explicative qualitative afin de dériver un score de catégorie pour chacune de la pluralité de périodes de mesure et un score de catégorie pour chacune des positions d'élément de configuration de véhicule.

**4.** Procédé d'évaluation d'état de voie selon l'une quelconque de la revendication 1 à la revendication 3, dans lequel l'indice d'évaluation est un niveau de confort de voyage.

**5.** Procédé d'évaluation d'état de voie selon la revendication 2, dans lequel :

la mesure par la section de mesure inclut, pour une pluralité de chemins de fer, la mesure d'une vitesse de déplacement du wagon de chemin de fer et d'une accélération de vibration de l'élément de configuration de véhicule prévu au niveau du wagon de chemin de fer à une pluralité d'emplacements sur la voie et lors d'une pluralité de périodes de mesure ;
le calcul par la section de calcul d'indice d'évaluation inclut le calcul de l'indice d'évaluation à la pluralité d'emplacements sur la voie et pour chacune de la pluralité de périodes de mesure ; et
l'analyse multivariable réalisée par la section d'analyse inclut, pour chacun de la pluralité d'emplacements sur la voie, la réalisation d'une analyse multivariable employant l'équation de relation incluant en outre un nombre de chemins de fer en tant que variable explicative qualitative afin de dériver un score de catégorie pour chacune de la pluralité de périodes de mesure et un score de catégorie pour chacun des nombres de chemins de fer, et
le procédé d'évaluation d'état de voie comprenant en outre l'utilisation d'une section d'identification d'anomalie pour identifier une anomalie dans un chemins de fer des nombres de chemins de fer d'après une différence entre des scores de catégorie parmi les nombres de chemins de fer à la pluralité d'emplacements.

**6.** Procédé d'évaluation d'état de voie selon la revendication 3, dans lequel :

la mesure par la section de mesure inclut, pour une pluralité de chemins de fer, la mesure d'une vitesse de déplacement du wagon de chemin de fer et d'une accélération de vibration de l'élément de configuration de véhicule prévu au niveau du wagon de chemin de fer à une pluralité d'emplacements sur la voie ;
le calcul par la section de calcul d'indice d'évaluation inclut le calcul de l'indice d'évaluation à la pluralité d'emplacements sur la voie et pour chacune de la pluralité de périodes de mesure ; et
l'analyse multivariable réalisée par la section d'analyse inclut, pour chacun de la pluralité d'emplacements sur la voie, la réalisation d'une analyse multivariable employant l'équation de relation incluant en outre une position sur l'élément de configuration de véhicule où l'accélération de vibration a été mesurée dans le chemins de fer en tant que variable explicative qualitative afin de dériver un score de catégorie pour chacune de la pluralité de périodes de mesure et un score de catégorie pour chacune des positions d'élément de configuration de véhicule,
le procédé d'évaluation d'état de voie comprenant en outre l'utilisation d'une section d'identification d'anomalie pour identifier une anomalie à une position sur les éléments de configuration de véhicule d'après une différence entre des scores de catégorie parmi les positions d'élément de configuration de véhicule à la pluralité d'emplacements.

**7.** Dispositif d'évaluation d'état de voie (100) pour évaluer un état d'une voie le long de laquelle un wagon de chemin de fer se déplace, le dispositif comprenant :

une section de calcul d'indice d'évaluation (12) qui est configurée pour calculer un indice d'évaluation relatif à un déplacement du wagon de chemin de fer à l'aide d'une accélération de vibration mesurée par une section de mesure qui mesure une vitesse de déplacement du wagon de chemin de fer et une accélération de vibration d'un élément de configuration de véhicule configuré par l'un quelconque parmi une carrosserie de voiture (2), un bogie (3A, 3B), une boîte d'essieu, ou un dispositif d'entraînement prévu au niveau du wagon de chemin de fer à un emplacement prédéterminé sur la voie lors d'une pluralité de périodes de mesure, dans lequel l'indice d'évaluation est un indice exprimé à l'aide de l'accélération de vibration de l'élément de configuration de véhicule associée à un état de voie,

une section d'analyse (14) qui, d'après l'indice d'évaluation calculé, la vitesse de déplacement mesurée par la section de mesure, et la période de mesure pour chacune de la pluralité de périodes de mesure, est configurée pour dériver un score de catégorie pour chacune de la pluralité de périodes de mesure en réalisant une analyse multivariable employant une équation de relation dans laquelle l'indice d'évaluation est une variable cible, la vitesse de déplacement est une variable explicative quantitative, et la période de mesure est une variable explicative qualitative, dans lequel le score de catégorie pour la durée de mesure exprime un degré de contribution de la période de mesure à l'indice d'évaluation ; et

une section d'évaluation d'état de voie qui est configurée pour évaluer un changement d'état à l'emplacement prédéterminé sur la voie d'après un changement des scores de catégorie dérivés pour la pluralité de périodes de mesure.

8. Programme d'évaluation d'un état d'une voie le long de laquelle un wagon de chemin de fer se déplace, le programme comprenant des instructions qui, lorsque le programme est exécuté par un ordinateur, amènent l'ordinateur à :

calculer un indice d'évaluation relatif à un déplacement du wagon de chemin de fer à l'aide d'une accélération de vibration mesurée par une section de mesure qui mesure une vitesse de déplacement du wagon de chemin de fer et une accélération de vibration d'un élément de configuration de véhicule configuré par l'un quelconque parmi une carrosserie de voiture, un bogie, une boîte d'essieu, ou un dispositif d'entraînement prévu au niveau du wagon de chemin de fer à un emplacement prédéterminé sur la voie lors d'une pluralité de périodes de mesure, dans lequel l'indice d'évaluation est un indice exprimé à l'aide de l'accélération de vibration de l'élément de configuration de véhicule associée à un état de voie ;

d'après l'indice d'évaluation calculé, la vitesse de déplacement mesurée par la section de mesure, et la période de mesure pour chacune de la pluralité de durées de mesure, dériver un score de catégorie pour chacune de la pluralité de périodes de mesure en réalisant une analyse multivariable employant une équation de relation dans laquelle l'indice d'évaluation est une variable cible, la vitesse de déplacement est une variable explicative quantitative, et la période de mesure est une variable explicative qualitative, dans lequel le score de catégorie pour la période de mesure exprime un degré de contribution de la période de mesure à l'indice d'évaluation ; et évaluer un changement d'état à l'emplacement prédéterminé sur la voie d'après un changement des scores de catégorie dérivés pour la pluralité de périodes de mesure.

# FIG.1

RIDE COMFORT LEVEL

TRAVEL SPEED

FIG.2

DETERIORATION

DETERIORATION

MAINTENANCE

RIDE COMFORT LEVEL

MEASUREMENT TIME (YEAR AND MONTH)

# FIG.3

```
                                                    ⌐⌐ 100
┌ ─ ─ ─ ─ ─ ─ ─ ─ ─ ─ ─ ─ ─ ─ ─ ─ ─ ─ ─ ─ ┐
│                                          │
│   ┌──────────────────────────┐ ⌐ 10     │
│   │   MEASUREMENT DATA        │          │
│   │   STORAGE SECTION         │          │
│   └──────────────────────────┘           │
│                 │                         │
│                 ▼                         │
│   ┌──────────────────────────┐  12       │
│   │   EVALUATION INDEX        │           │
│   │   CALCULATION SECTION     │           │
│   └──────────────────────────┘           │
│                 │                         │
│                 ▼                         │
│   ┌──────────────────────────┐  14       │
│   │   MULTIVARIATE            │           │
│   │   ANALYSIS SECTION        │           │
│   └──────────────────────────┘           │
│                 │                         │
│                 ▼                         │
│   ┌──────────────────────────┐  16       │
│   │   CHANGE-IN-CONDITION     │           │
│   │   EVALUATION SECTION      │           │
│   └──────────────────────────┘           │
│                 │                         │
│                 ▼                         │
│   ┌──────────────────────────┐  18       │
│   │   ABNORMALITY            │           │
│   │   IDENTIFICATION SECTION  │           │
│   └──────────────────────────┘           │
│                                          │
└ ─ ─ ─ ─ ─ ─ ─ ─ ─ ─ ─ ─ ─ ─ ─ ─ ─ ─ ─ ─ ┘
```

FIG.4

# FIG.5

FIG.6

# FIG.7

```
        ┌─────────────────┐
        │      START      │
        └─────────────────┘
                 │
                 ▼
   ┌──────────────────────────────┐   S100
   │ CALCULATE EVALUATION INDEX   │
   └──────────────────────────────┘
                 │
                 ▼
   ┌──────────────────────────────┐   S102
   │  SET RELATIONSHIP EQUATION   │
   └──────────────────────────────┘
                 │
                 ▼
   ┌──────────────────────────────┐   S104
   │     DETERMINE CATEGORY       │
   │  SCORES AND REGRESSION       │
   │        COEFFICIENT           │
   └──────────────────────────────┘
                 │
                 ▼
   ┌──────────────────────────────┐   S106
   │    EVALUATE CHANGE IN        │
   │        CONDITION             │
   └──────────────────────────────┘
                 │
                 ▼
   ┌──────────────────────────────┐   S108
   │    IDENTIFY ABNORMALITY      │
   └──────────────────────────────┘
                 │
                 ▼
        ┌─────────────────┐
        │       END       │
        └─────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0815098 A

- GB 2416034 A

**Non-patent literature cited in the description**

- **KARAKASIS et al.** *A factorial analysis for the determination of an optimal train speed with a desired ride comfort*